# DEMANDE DE BREVET EUROPEEN

(11) **EP 4 717 901 A1**
(43) Date de publication de la demande: **01.04.2026**
(21) Numéro de dépôt: 25188187.6
(22) Date de dépôt: 08.07.2025
(51) Int. Cl.: F02C 9/28

(54) **PROCEDE ET AERONEF MUNI D'UN SYSTEME DE DETERMINATION D'UN NIVEAU D EMISSION POLLUANTE**

(30) Priorité: 30.09.2024 FR 2410463
(71) Demandeur: Airbus Helicopters, 13725 Marignane Cedex (FR)
(72) Inventeur: WEBER, Cyrille, 13170 LES PENNES MIRABEAU (FR)
(74) Mandataire: GPI Brevets

(57) **Abrégé**

La présente invention concerne un aéronef (1) comprenant une installation motrice (6) munie d'au moins un moteur à combustion (10), et d'un système (19) de détection d'émission polluante qui comprend : i) au moins un senseur moteur (20) par moteur à combustion (10) qui émet un signal de mesure moteur porteur d'une valeur mesurée d'un paramètre moteur du moteur à combustion associé, ii)au moins un senseur d'aéronef (30) qui émet un signal de mesure d'aéronef porteur d'une valeur mesurée d'un paramètre d'aéronef, iii) un contrôleur (40) déterminant au moins une quantité produite d'un polluant émise lors de ladite mission en fonction du signal de mesure moteur et du signal de mesure d'aéronef.

## Description

La présente invention concerne un aéronef muni d'un système de détermination d'un niveau d'émission polluante ainsi qu'un procédé de détection d'une émission polluante en fonctionnement avec un aéronef.

Un aéronef est susceptible d'émettre en vol des polluants, tels que du dioxyde de carbone dit plus simplement « CO2 », de l'oxyde d'azote dit plus simplement « Nox », des particules non volatiles dites plus simplement « nvPM » ou encore des particules d'hydrocarbure imbrûlé dites plus simplement « UHC ».

Des règlementations locales contraignent certains opérateurs à déclarer le niveau de polluantes émis.

Par ailleurs, les législations en termes d'émissions polluantes tendent à être de plus en plus contraignantes. Par exemple, la circulation de certains véhicules est conditionnée à des critères de pollution. Ainsi, le survol de certaines zones géographiques est éventuellement susceptible d'être conditionné à un niveau réglementé d'émissions polluantes.

Or, il s'avère délicat d'évaluer de manière précise les émissions polluantes d'un aéronef. La valeur d'une émission polluante d'un aéronef est parfois estimée pour une gamme d'aéronefs, sur la base d'un profil de vol générique. La quantité émise d'un polluant est ainsi estimée à partir d'un jeu d'hypothèses introduisant des approximations. Bien qu'efficace, cette approche est susceptible de fournir un résultat final imprécis dans des conditions qui diffèrent fortement des hypothèses retenues, particulièrement pour les émissions d'oxyde d'azote ou de particules fines.

Le document US2018170575A1 concerne la surveillance d'un moteur d'aéronef avec un réseau sans fil (WEMS) de capteurs, répondant aux normes d'émission et détermine un calendrier de maintenance pour un moteur d'aéronef. Le document US2023258101A1 décrit un aéronef pourvu de moteurs à turbine à gaz, et vise à tirer parti de différentes propriétés de divers carburants pour l'alimentation des moteurs, leur exploitation ou entretien.

La présente invention a alors pour objet de proposer un procédé et un aéronef innovants visant à évaluer en vol la quantité émise d'un ou plusieurs polluants.

Ainsi, l'invention concerne un aéronef comprenant une installation motrice munie d'au moins un moteur à combustion.

Cet aéronef comporte un système de détection d'émission polluante qui comprend :
- au moins un senseur moteur par moteur à combustion, ledit senseur moteur émettant un signal de mesure moteur porteur d'une valeur mesurée d'un paramètre moteur du moteur à combustion associé, ce paramètre moteur influençant ladite émission polluante,
- au moins un senseur d'aéronef, ledit senseur d'aéronef émettant un signal de mesure d'aéronef porteur d'une valeur mesurée d'un paramètre d'aéronef, ce paramètre d'aéronef influençant ladite émission polluante,
- un contrôleur recevant, lors d'une mission, le signal de mesure moteur et le signal de mesure d'aéronef, le contrôleur étant configuré pour déterminer au moins une quantité produite d'un polluant émise lors de ladite mission, en fonction au moins du signal de mesure moteur et du signal de mesure d'aéronef, le contrôleur étant configuré pour piloter au moins un système de l'aéronef en lui transmettant un signal d'émission polluante fonction de ladite au moins une quantité produite.

Le terme « signal » désigne un signal numérique ou analogique, optique ou électrique par exemple.

Lors d'une mission, le contrôleur reçoit le ou les signaux de mesure moteur et le ou les signaux de mesure d'aéronef. Ce contrôleur est alors muni d'un modèle qui est configuré pour déterminer une ou des quantités produites, émises lors de la mission courante, d'un ou de plusieurs polluants en fonction a minima du ou des signaux de mesure moteur et du ou des signaux de mesure d'aéronef. En effet, les polluants émis par un aéronef résultent à la fois du fonctionnement de son installation motrice et des conditions d'utilisation de l'aéronef.

Un tel modèle peut être déterminé par essais, calculs et/ou simulations. Un tel modèle peut prendre la forme d'une ou de plusieurs équations mathématiques, d'une intelligence artificielle et par exemple d'un réseau de neurones, d'un tableur ou autres.

Dès lors, le contrôleur émet un ou des signaux d'émission polluante en fonction au moins de la ou des quantités produites pour piloter un ou des systèmes de l'aéronef en fonction du ou des polluants émis. Un signal d'émission polluante peut être porteur de la quantité produite d'un ou de plusieurs polluants, émise lors de la mission, ou encore d'un ordre de générer une alarme ou une alerte en fonction du système destinataire.

Ainsi, l'aéronef est muni d'un système de détection d'émission polluante qui est capable de déterminer durant une mission, et en particulier en vol, la quantité émise d'un ou de plusieurs polluants, de manière fiable et répétitive. Cette quantité d'un ou de plusieurs polluants est ensuite utilisée pour commander un ou des systèmes de l'aéronef, afin de répondre à des règlements divers, voire pour mettre en œuvre des actions correctives en vol.

Cet aéronef peut de plus comporter une ou plusieurs des caractéristiques qui suivent, prises seules ou en combinaison.

Selon une possibilité, ladite au moins une quantité produite de polluant peut être choisie parmi : une quantité produite de dioxyde de carbone, une quantité produite d'oxyde d'azote, une quantité produite de particules non volatiles, une quantité produite de particules d'hydrocarbure imbrûlé, et éventuellement tout autre type de composés d'émission jugé opportun en fonction du carburant utilisé.

Ainsi, un signal d'émission polluante peut être porteur d'au moins une quantité produite de dioxyde de carbone, et /ou d'au moins une quantité produite d'oxyde d'azote, et /ou d'au moins une quantité produite de particules non volatiles, et /ou d'au moins une quantité produite de particules d'hydrocarbure imbrûlé. Ces divers polluants permettent de bien évaluer le niveau de pollution généré par l'aéronef.

Le terme « quantité » peut désigner tout paramètre permettant de quantifier l'émission d'un polluant, telle une masse, une masse émise par seconde, un nombre de particules ou un nombre de particules par unité de volume par exemple.

Selon une possibilité compatible avec les précédentes, ladite au moins une quantité produite d'un polluant peut être égale à une quantité instantanée de ce polluant émise à un instant courant ou à la somme des quantités instantanées de ce polluant émises depuis un démarrage de l'aéronef ou à la somme des quantités instantanées de ce polluant émises depuis un début d'une phase de vol courante.

Une mission peut être décomposée de manière usuelle en diverses phases de vol. L'expression « phase de vol » désigne une partie d'une mission durant laquelle l'aéronef a un comportement particulier correspondant à un comportement mémorisé. Ainsi une mission peut comporter une phase durant laquelle l'aéronef est immobile au sol, une phase de roulage au sol, une phase de décollage, une phase d'atterrissage, une phase de vol en croisière, une phase de vol stationnaire, une phase de vol en montée, une phase de vol en descente par exemple.

A chaque itération et pour chaque polluant étudié, le contrôleur calcule une quantité instantanée émise de ce polluant par l'aéronef. Chaque quantité produite est fonction de cette quantité instantanée.

Eventuellement, le système de détection d'émission polluante peut comprendre une interface homme-machine de réglage en communication avec le contrôleur, l'interface homme-machine de réglage émettant un signal indiquant si une quantité produite portée par le signal d'émission polluante doit être égale à la quantité instantanée courante ou à la somme des quantités instantanées de ce polluant émises depuis un démarrage de l'aéronef ou à la somme des quantités instantanées de ce polluant émises depuis un début d'une phase de vol courante. Un pilote peut alors choisir la nature des informations à déterminer en fonction de son besoin.

Eventuellement, pour un même polluant, le signal d'émission polluante peut être porteur de la quantité instantanée, et/ou de la somme des quantités instantanées de ce polluant émises depuis le démarrage de l'aéronef, et/ou de la somme des quantités instantanées de ce polluant émises depuis un début d'une phase de vol courante.

Selon une possibilité compatible avec les précédentes, ledit paramètre moteur peut être choisi dans la liste suivante : une température à l'intérieur du moteur à combustion mesurée avec un senseur moteur de température, un débit de carburant circulant dans le moteur à combustion mesuré avec un débitmètre du moteur, une pression dans le moteur à combustion mesurée avec un senseur moteur de pression, une puissance développée par le moteur à combustion mesurée avec un senseur moteur de puissance, un vieillissement du moteur évalué par un calculateur tel un calculateur moteur ou un calculateur d'un système avionique de l'aéronef, une vitesse de rotation N1 d'un générateur de gaz du moteur à combustion mesurée avec un premier senseur moteur de vitesse, une vitesse de rotation N2 d'une turbine de travail du moteur à combustion mesurée avec un deuxième senseur moteur de vitesse.

Ces paramètres moteurs ont en effet une influence sur les polluants émis par l'aéronef. Dès lors, le système de détection d'émission polluante peut mesurer un ou plusieurs de ces paramètres moteurs. Par exemple, le système de détection d'émission polluante peut au moins mesurer le débit de carburant, voire la puissance développée par le moteur à combustion si une telle puissance n'est pas évaluée au niveau de l'aéronef.

Selon une possibilité compatible avec les précédentes, ledit paramètre d'aéronef peut être choisi dans la liste suivante : i) une pression extérieure, dans un milieu entourant l'aéronef, mesurée avec un senseur d'aéronef de pression, ii) une température extérieure dans ledit milieu mesurée avec un senseur d'aéronef de température, iii) une puissance motrice générée par l'installation motrice mesurée avec un senseur d'aéronef de puissance de l'aéronef, iv) un débit de carburant circulant vers le moteur à combustion mesuré avec un débitmètre d'aéronef.

Ces paramètres d'aéronef ont en effet une influence sur les polluants émis par l'aéronef. Dès lors, le système de détection d'émission polluante peut mesurer un ou plusieurs de ces paramètres d'aéronef.

Le système de détection d'émission polluante peut au moins mesurer la pression extérieure et la température extérieure, voire la puissance motrice si la puissance développée par un moteur à combustion n'est pas évaluée au niveau moteur, voire un débit de carburant circulant vers le moteur à combustion notamment si ce débit de carburant n'est pas évalué au niveau moteur.

Selon une possibilité compatible avec les précédentes, l'aéronef peut comporter une interface homme-machine de paramétrage permettant de choisir un type de carburant, ladite interface homme-machine de paramétrage émettant un signal de paramétrage reçu par le contrôleur, le contrôleur étant configuré pour déterminer ladite au moins une quantité produite en fonction du signal de mesure moteur ainsi que du signal de mesure d'aéronef et du signal de paramétrage.

Des carburants différents peuvent engendrer des niveaux de pollution sensiblement différents. Cette caractéristique permet ainsi au contrôleur de prendre en considération le carburant utilisé et donc d'obtenir une valeur plus précise de la quantité produite de polluant émise.

Selon une possibilité compatible avec les précédentes, le signal d'émission polluante peut être porteur de ladite au moins une quantité produite de polluant et ledit au moins un système peut comporter au moins un des organes de traitement suivant : un afficheur recevant le signal d'émission polluante et configuré pour afficher ladite au moins une quantité produite de polluant, une mémoire de stockage recevant le signal d'émission polluante et configuré pour mémoriser ladite au moins une quantité produite de polluant.

Ainsi, un afficheur peut afficher au moins une quantité produite d'un ou de plusieurs polluants. Un pilote peut alors prendre en considération les informations affichées pour piloter l'aéronef. Le pilote peut éventuellement suivre une trajectoire compatible avec la pollution générée. Alternativement ou de manière complémentaire, le pilote peut agir directement ou indirectement sur le fonctionnement d'au moins un moteur à combustion, par exemple en modifiant le pas des pales d'un rotor ou d'une hélice pour réduire la puissance à fournir avec le moteur à combustion, ou sur les conditions extérieures en changeant éventuellement d'altitude.

De manière alternative ou complémentaire, une mémoire peut mémoriser une quantité produite d'un ou de plusieurs polluants. Le cas échéant, un pilote peut fournir la quantité produite d'un ou de plusieurs polluants aux autorités locales à la fin de sa mission ou la quantité produite mémorisée peut être utilisée lors d'un vol ultérieur pour évaluer la santé d'un moteur à combustion.

Selon une possibilité compatible avec les précédentes, ledit au moins un système peut comporter un générateur d'alarme recevant le signal d'émission polluante et configuré pour générer une alarme si ladite au moins une quantité produite de polluant est supérieure à un seuil mémorisé.

Le signal d'émission polluante peut comprendre ladite au moins une quantité produite d'un ou de plusieurs polluants, et le générateur d'alarme est configuré pour générer l'alarme s'il détermine qu'une quantité produite d'un polluant est supérieure à un seuil mémorisé respectif. Alternativement, le contrôleur peut déterminer si une quantité produite d'un polluant est supérieure à un seuil mémorisé, le signal d'émission polluante transmis au générateur d'alarme indiquant si l'alarme doit être émise en conséquence.

Indépendamment de la variante, une alarme peut être générée si une quantité produite d'un polluant est supérieure à un seuil mémorisé respectif. Un pilote peut alors être informé qu'un seuil de pollution est dépassé, afin d'entreprendre des actions de pilotage correctives par exemple.

Selon une possibilité compatible avec les précédentes, le signal d'émission polluante peut être porteur d'au moins une quantité produite de polluant et ledit signal de mesure est transmis à un système de pilotage automatique, le système de pilotage automatique étant configuré pour modifier un réglage de l'aéronef si ladite au moins une quantité produite de polluant est supérieure à une limite d'émissions polluantes mémorisée.

Dès lors, le système de pilotage automatique peut agir sur l'aéronef, éventuellement afin de respecter automatiquement une réglementation. Par exemple, le système de pilotage automatique peut modifier un pas cyclique longitudinal des pales d'un rotor d'hélicoptère, possiblement à l'aide d'une boucle d'asservissement basée sur la quantité produite d'un polluant et la limite d'émissions polluantes associée, pour modifier la vitesse d'avancement de l'aéronef. Possiblement mais non obligatoirement, la quantité produite d'un polluant peut être égale à la quantité instantanée dans ce cas.

Selon une possibilité compatible avec les précédentes, le signal d'émission polluante peut être porteur d'au moins une quantité produite de polluant et ledit signal de mesure est transmis à un générateur de trajectoire, le générateur de trajectoire étant configuré pour générer une trajectoire de déroutement si ladite au moins une quantité produite de polluant est supérieure à une limite réglementaire à respecter dans une zone géographique traversée par une trajectoire courante de l'aéronef.

Cette trajectoire de déroutement peut être automatiquement affichée sur un afficheur. Par exemple, mais non obligatoirement, la quantité produite peut être égale à la quantité instantanée dans ce cas.

Le générateur de trajectoire peut être d'un type usuel. Si la quantité émise d'un polluant est supérieure à une telle limite réglementaire, le générateur de trajectoire peut déterminer automatiquement une trajectoire alternative permettant de rallier la destination souhaitée sans passer dans la zone géographique imposant une émission polluante inférieure à la quantité produite actuellement émise.

Selon une possibilité compatible avec les précédentes, ladite mission étant réalisée après une mission précédente, le signal d'émission polluante peut être transmis à un alerteur, l'alerteur étant configuré pour générer une alerte moteur en fonction d'une comparaison entre la quantité produite de polluant et une quantité produite de polluant mémorisée à l'issue d'une mission précédente ou d'une phase de vol équivalente précédente, cette alerte moteur signalant éventuellement un possible dysfonctionnement du moteur à combustion.

L'expression « phase de vol équivalente » fait référence à deux phases de vol d'un même type parmi les diverses phases de vol décrites précédemment. Par exemple, les quantités produites de polluant émis lors de deux phases de décollage sont comparées.

Le système de détection d'émission polluante peut détecter une dérive sensible de la valeur émise d'un polluant, qui peut alors être l'image d'une panne ou un dysfonctionnement moteur.

Par exemple, l'alerteur ou le contrôleur compare, à l'issue d'une mission ou d'une phase de vol, la quantité produite d'un polluant émis lors de la mission ou de la phase de vol divisée par la durée de la mission ou de cette phase de vol mesurée avec un chronomètre, et la quantité produite correspondante de ce même polluant émis lors de la mission ou de la phase de vol équivalente précédente divisée par la durée de la mission ou de la phase de vol équivalente précédente. Si la différence entre ces deux quantités est supérieure à une limité mémorisée, l'alerteur génère l'alerte moteur.

L'invention vise aussi un procédé de détection d'émission polluante en vol avec un aéronef comprenant une installation motrice munie d'au moins un moteur à combustion.

Le procédé comporte durant une mission :
- génération d'au moins un signal de mesure moteur par moteur à combustion avec un senseur moteur associé, ledit signal de mesure moteur étant porteur d'une valeur mesurée d'un paramètre moteur du moteur à combustion associé influençant ladite émission polluante,
- génération d'au moins un signal de mesure d'aéronef avec au moins un senseur d'aéronef, ledit signal de mesure d'aéronef étant porteur d'une valeur mesurée d'un paramètre d'aéronef influençant ladite émission polluante,
- réception avec un contrôleur de l'aéronef du signal de mesure moteur et du signal de mesure d'aéronef,
- détermination avec le contrôleur d'au moins une quantité produite d'un polluant émise lors de ladite mission en fonction au moins du signal de mesure moteur et du signal de mesure d'aéronef,
- contrôle avec le contrôleur d'au moins un système de l'aéronef en lui transmettant un signal d'émission polluante fonction de ladite au moins une quantité produite.

Le procédé peut comporter au moins une des étapes suivantes :
- affichage, sur un afficheur d'au moins un système recevant le signal d'émission polluante, de ladite au moins une quantité produite de polluant,
- mémorisation, dans une mémoire de stockage d'au moins un système recevant le signal d'émission polluante, de ladite au moins une quantité produite de polluant,
- génération d'une alarme, avec un générateur d'alarme d'au moins un système recevant le signal d'émission polluante, quand ladite au moins une quantité produite de polluant est supérieure à un seuil mémorisé,
- génération d'une trajectoire de déroutement, avec un générateur de trajectoire d'au moins un système, quand ladite au moins une quantité produite de polluant est supérieure à une limite réglementaire à respecter dans une zone géographique traversée par une trajectoire courante de l'aéronef,
- génération d'une alerte, avec un alerteur d'au moins un système recevant le signal d'émission polluante, en fonction d'une comparaison entre la quantité produite de polluant et une quantité produite de polluant mémorisée à l'issue d'une mission précédente ou d'une phase de vol équivalente, et
- modification d'un réglage de l'aéronef, avec un système de pilotage automatique d'au moins un système recevant le signal d'émission polluante, quand ladite au moins une quantité produite de polluant est supérieure à une limite d'émissions polluantes mémorisée.

L'invention et ses avantages apparaîtront avec plus de détails dans le cadre de la description qui suit avec des exemples donnés à titre illustratif en référence aux figures annexées qui représentent :
la figure 1, un schéma illustrant un aéronef selon l'invention, et,
la figure 2, un schéma illustrant un procédé selon l'invention.

Les éléments présents dans plusieurs figures distinctes sont affectés d'une seule et même référence.

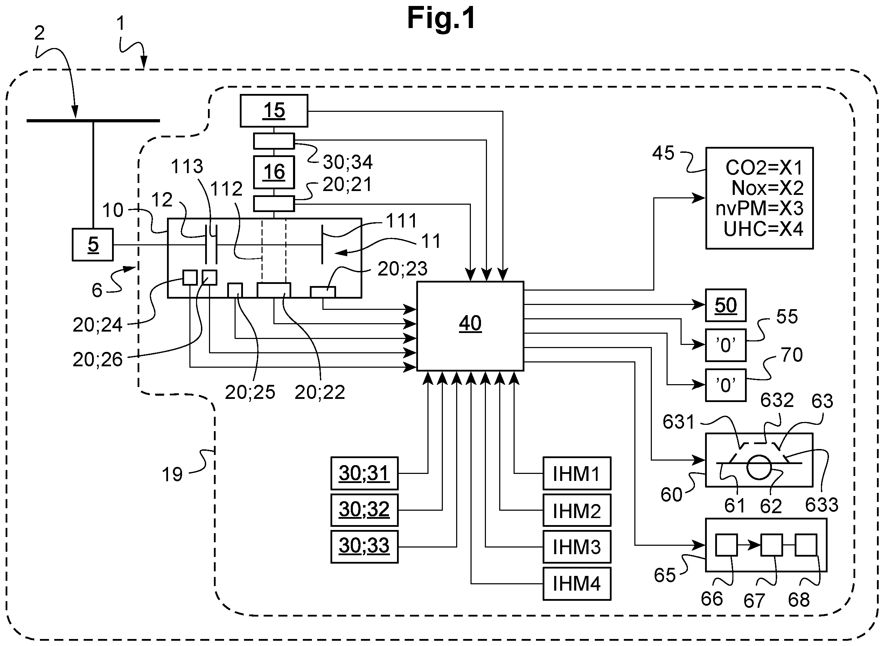

La figure 1 présente un aéronef 1 selon l'invention. Cet aéronef 1 comprend une installation motrice 6 qui est munie d'au moins un moteur à combustion 10. Ce moteur à combustion 10 est un moteur thermique fonctionnant par combustion d'un carburant. Le ou les moteurs à combustion 10 mettent en mouvement une chaîne mécanique 5 pour participer au déplacement de l'aéronef 1. Par exemple, l'aéronef 1 est un giravion et la chaîne mécanique 5 met en rotation au moins un rotor 2.

Par exemple, un ou des moteurs à combustion 10 sont des turbomoteurs. Un tel turbomoteur comprend un générateur de gaz 11. Le générateur de gaz 11 est muni d'un ensemble de compression 111 ayant au moins une turbine de compression, d'une chambre de combustion 112 alimentée en carburant par un doseur de carburant 16 et en air par l'ensemble de compression 111, et d'un ensemble de détente 113 comprenant au moins une turbine de détente mise en rotation par les gaz sortant de la chambre de combustion 112 et solidaire en rotation de la ou les turbines de compression. En outre, le turbomoteur comprend au moins une turbine de travail 12, libre ou liée à l'ensemble de détente 113. La turbine de travail 12 est alors reliée cinématiquement et mécaniquement à un arbre de puissance relié à la chaine mécanique 5 pour la mettre en mouvement. On se référera à la littérature pour avoir une description détaillée d'un tel moteur à combustion.

Eventuellement, un ou des moteurs à combustion 10 sont des moteurs à pistons. Un tel moteur à pistons comprend des chambres de combustion alimentées en carburant pour mettre en mouvement un arbre de puissance.

Par ailleurs, chaque moteur à combustion 10 peut être piloté par un calculateur moteur 15, éventuellement dédié à ce moteur 10.

La figure 1 présente une installation motrice 6 ayant un unique moteur à combustion 10 à titre d'exemple, l'installation motrice 6 pouvant avoir deux moteurs à combustion 10 ou plus.

Indépendamment du nombre et du type de moteurs à combustion 10, l'aéronef 1 comporte un système 19 de détection d'émission polluante.

Ce système 19 de détection d'émission polluante comprend, pour chaque moteur à combustion 10, au moins un senseur moteur 20. Chaque senseur moteur 20 émet un signal de mesure moteur porteur de la valeur courante d'un paramètre moteur du moteur à combustion 10 correspondant, ce paramètre moteur influençant ladite émission polluante. Le terme « chaque » est utilisé dans l'expression « chaque senseur moteur 20 » indépendamment du nombre de senseurs moteur, à savoir aussi bien en présence d'un unique senseur moteur qu'en présence de plusieurs senseurs moteur. Sans précision, il en va de même pour le terme « chaque » utilisé par la suite.

Par « senseur », on entend ici un capteur physique capable de mesurer directement le paramètre en question, mais aussi un système pouvant comprendre un ou plusieurs capteurs physiques ainsi que des moyens de traitement du signal permettant de fournir une estimation du paramètre à partir des mesures fournies par ce ou ces capteurs physiques. De manière similaire, on désignera par « mesure » de ce paramètre aussi bien une mesure brute d'un capteur physique qu'une mesure obtenue par un traitement de signal plus ou moins complexe à partir de mesures brutes.

Par ailleurs, la référence 20 désigne n'importe quel senseur moteur, les références 21-24 désignant des senseurs particuliers si besoin.

Au moins un voire chaque paramètre moteur peut être choisi dans la liste suivante :
- une température à l'intérieur du moteur à combustion 10, cette température étant mesurée avec un senseur moteur de type senseur moteur de température 22 d'un type usuel, cette température pouvant être par exemple la température dite T4 dans le cadre d'un turbomoteur,
- un débit de carburant circulant dans le moteur à combustion 10, que le moteur à combustion 10 soit un turbomoteur ou un moteur à pistons, ce débit étant par exemple mesuré avec senseur moteur de type débitmètre moteur 21 usuel,
- une pression dans le moteur à combustion 10, cette pression étant mesurée avec un senseur moteur de type senseur moteur de pression 23 d'un type usuel, cette pression pouvant être par exemple une pression dans le générateur de gaz 11 dans le cas d'un turbomoteur voire la pression connue sous l'expression P3 par l'homme du métier,
- une puissance développée par le moteur à combustion 10 mesurée avec un senseur moteur de type senseur moteur de puissance 24 de l'aéronef 1, le senseur moteur de puissance 24 pouvant comprendre un senseur de vitesse de rotation et un couplemètre agencés sur l'arbre de puissance du moteur à combustion 10,
- un vieillissement du moteur à combustion 10 évalué par le calculateur moteur 15, par exemple lors d'un contrôle de santé moteur usuel, ou un calculateur de l'aéronef configuré à cet effet,
- une vitesse de rotation N1 le cas échéant du générateur de gaz 11 du moteur à combustion 10 mesurée avec un premier senseur moteur de vitesse 25 usuel,

une vitesse de rotation N2 d'une turbine de travail 12 du moteur à combustion 10 mesurée avec un deuxième senseur moteur de vitesse 26.

Par ailleurs, le système 19 de détection d'émission polluante comprend au moins un senseur d'aéronef 30, le ou les senseurs d'aéronef 30 émettant chacun un signal de mesure d'aéronef porteur d'une valeur mesurée d'un paramètre d'aéronef, ce paramètre d'aéronef influençant ladite émission polluante. La référence 30 désigne n'importe quel senseur d'aéronef, les références 31-33 désignant des senseurs d'aéronef particuliers si besoin.

Eventuellement, l'aéronef 1 comporte un senseur d'aéronef de pression 31 mesurant une pression extérieure P0 régnant dans le milieu extérieur entourant l'aéronef 1.

Eventuellement, l'aéronef 1 comporte un senseur d'aéronef de température 32 mesurant une température extérieure T0 régnant dans le milieu extérieur.

Eventuellement, l'aéronef 1 comporte un senseur d'aéronef de puissance 33 mesurant la puissance motrice générée par l'installation motrice 6. Par exemple, le senseur d'aéronef de puissance comporte un senseur de vitesse de rotation et un couplemètre agencés sur un arbre de la chaîne mécanique 5, tel qu'éventuellement un mât rotor solidaire en rotation du rotor 2.

Eventuellement, l'aéronef 1 comporte un senseur d'aéronef de type débitmètre d'aéronef 34 usuel qui mesure un débit de carburant circulant en dehors de et vers le moteur à combustion.

Par ailleurs, l'aéronef 1 comporte une interface homme-machine de paramétrage IHM1 permettant de choisir un type de carburant, par exemple parmi une liste mémorisée de carburants. Cette interface homme-machine de paramétrage **IHM1** émet un signal de paramétrage porteur du carburant sélectionné.

L'expression « interface homme machine » désigne ici et par la suite tout moyen d'interaction connu, tel qu'un bouton, un écran tactile, une souris, un système vocal, un système oculaire, un clavier, ou autres.

Par ailleurs, le système 19 de détection d'émission polluante comprend un contrôleur 40 recevant le ou les signaux de mesure moteur et le ou les signaux de mesure d'aéronef, voire le cas échéant le signal de paramétrage.

Le contrôleur 40 peut comprendre par exemple au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur, etc.

Le contrôleur 40 est configuré pour déterminer au moins une quantité produite d'au moins un polluant émis lors de la mission courante, en fonction du signal de mesure moteur ainsi que du signal de mesure d'aéronef, voire du signal de paramétrage. De plus, le contrôleur 40 est configuré pour émettre en conséquence un ou plusieurs signaux d'émission polluante. Chaque signal d'émission polluante peut être porteur soit d'une ou de plusieurs quantités produites d'au moins un polluant soit d'un ordre établi à partir d'une telle quantité produite. Ainsi, le contrôleur 40 peut exécuter des instructions permettant d'obtenir la ou les quantités produites d'un ou de plusieurs polluants et le signal d'émission polluante en fonction de chaque signal de mesure moteur et de chaque signal de mesure d'aéronef, voire du signal de paramétrage. Le contrôleur 40 peut, par exemple, comporter un modèle mathématique, fournissant la quantité instantanée émise d'un polluant, par exemple du dioxyde de carbone, en fonction des données contenues dans les signaux de mesure d'aéronef et moteur voire de paramétrage.

En particulier, ladite au moins une quantité produite qt d'un polluant peut être choisie parmi une liste comprenant au moins : une quantité produite de dioxyde de carbone, une quantité produite d'oxyde d'azote, une quantité produite de particules non volatiles, une quantité produite de particules d'hydrocarbure imbrûlé.

Eventuellement, l'aéronef 1 peut comprendre une interface homme machine de choix IHM2 transmettant un signal de choix au contrôleur 40. Un opérateur peut utiliser cette interface homme machine de choix IHM2 pour sélectionner le ou les polluants à surveiller.

A chaque instant, à savoir à chaque itération de calcul, le contrôleur 40 peut évaluer une quantité instantanée émise pour chaque polluant suivi, afin d'évaluer la quantité produite de ce polluant.

Selon une première variante, le contrôleur 40 calcule la quantité produite qt d'un polluant en considérant que la quantité produite est égale à la quantité instantanée qinst de ce polluant émise à un instant courant.

Selon une deuxième variante, le contrôleur 40 calcule la quantité produite qt d'un polluant en considérant que la quantité produite est égale à la somme des quantités instantanées qinst de ce polluant émises depuis un démarrage de l'aéronef 1. Par exemple, un démarreur ou un calculateur moteur envoie un signal de démarrage au contrôleur 40 porteur de l'instant de démarrage de l'aéronef. En réponse, le contrôleur 40 met en œuvre la détection d'un ou de plusieurs polluants.

Selon une troisième variante, le contrôleur 40 calcule la quantité produite qt d'un polluant en considérant que la quantité produite est égale à la somme des quantités instantanées qinst de ce polluant émises depuis un début d'une phase de vol courante. Par exemple, un calculateur avionique, qui peut être le contrôleur 40, détermine le changement de phases de vol. En réponse, le contrôleur met en œuvre la détection d'un ou de plusieurs polluants.

Eventuellement, l'aéronef 1 peut comprendre une interface homme machine de réglage IHM3 transmettant un signal de réglage au contrôleur 40. Un opérateur peut utiliser cette interface homme machine de réglage IHM3 pour sélectionner la variante à appliquer.

Eventuellement, les variantes précédentes peuvent être mises en œuvre en parallèle, les diverses quantités évoquées pouvant toutes être évaluées en même temps pour un ou des polluants.

Indépendamment des informations portées par le signal d'émission polluante, le contrôleur 40 est configuré pour piloter au moins un système 45, 50, 55, 60, 65, 70 de l'aéronef 1 en lui transmettant un signal d'émission polluante fonction de ladite au moins une quantité produite.

L'aéronef 1 peut alors comporter un ou des système de traitement qui reçoivent le ou les signaux d'émission polluante et changent d'état en conséquence.

Eventuellement, l'aéronef 1 peut comprendre une interface homme machine de sélection IHM4 permettant à un opérateur de sélectionner les systèmes 45, 50, 55, 60, 65, 70 devant être pilotés par le contrôleur 40. L'interface homme machine de sélection IHM4 transmet un signal de sélection au contrôleur 40, le contrôleur 40 générant un signal d'émission polluante pour chaque système 45, 50, 55, 60, 65, 70 à piloter.

Ainsi, l'aéronef 1 peut comporter un afficheur 45 recevant un signal d'émission polluante porteur d'au moins une quantité produite qt d'un polluant, et configuré pour afficher cette quantité produite qt. Un tel afficheur 45 peut comprendre un écran, un système de visualisation de casque, un système de visualisation tête haute ou autres. Selon l'exemple illustré, l'afficheur 45 affiche une quantité produite X1 de dioxyde de carbone CO2, une quantité produite X2 d'oxyde d'azote Nox, une quantité produite X3 de particules non volatiles nvPM, et une quantité produite X4 de particules d'hydrocarbure imbrûlé UHC.

De manière alternative ou complémentaire, l'aéronef 1 peut comporter une mémoire 50 de stockage recevant un signal d'émission polluante porteur d'au moins une quantité produite qt d'un polluant, et configurée pour mémoriser la ou les quantités produites qt du ou des polluants surveillés.

De manière alternative ou complémentaire, l'aéronef 1 peut comporter un générateur d'alarme 55 recevant le signal d'émission polluante et configuré pour générer une alarme si une ou des quantités produites qt est supérieure à un ou des seuils mémorisés respectifs. Selon une possibilité, le contrôleur 40 est configuré pour déterminer si une ou des quantités produites qt sont supérieures à un ou des seuils mémorisés respectifs, le signal d'émission polluante indiquant dans l'affirmative que l'alarme doit être émise. Selon une autre possibilité, le signal d'émission polluante est porteur de la ou des quantités produites, et le générateur d'alarme est configuré pour déterminer si au moins une quantité produite qt est supérieure au seuil mémorisé associé et générer ou non une alarme en conséquence.

Le générateur d'alarme 55 peut générer une alerte prenant la forme d'une alarme visuelle, par exemple par le biais de l'émission d'une lumière avec une diode électroluminescente ou un équivalent ou de l'affichage sur un écran d'un ou plusieurs caractères, d'une alarme sonore, par le biais d'un haut-parleur, et/ou d'une alarme haptique, par exemple à l'aide d'une unité vibrante faisant vibrer un organe tenu ou porté par un individu.

De manière alternative ou complémentaire, l'aéronef 1 peut comporter un système de pilotage 65 automatique. Un tel système de pilotage 65 comporte usuellement un calculateur de pilotage automatique 66 pilotant un ou des actionneurs 67 agissant sur des commandes de vol 68. De telles commandes de vol 68 peuvent rendre la forme d'une surface aérodynamique, du doseur de carburant 16 ou autres. Le signal d'émission polluante porteur d'au moins une quantité produite qt d'un polluant peut alors être transmis au système de pilotage 65. Dès lors, le système de pilotage 65 est configuré pour modifier un réglage de l'aéronef 1 si une ou des quantités produites qt est supérieure à une ou des limites d'émissions mémorisées respectives. Par exemple, le système de pilotage 65 peut ordonner au doseur de carburant 16 d'un moteur 10 de modifier le débit de carburant ou à un actionneur 67 de modifier le pas de pales d'un rotor 2.

De manière alternative ou complémentaire, l'aéronef 1 peut comporter un générateur de trajectoire 60 usuel, tel que par exemple un système connu par l'acronyme FMS et l'expression anglaise « Flight Management System ». Le signal d'émission polluante porteur d'au moins une quantité produite qt d'un polluant peut alors être transmis au générateur de trajectoire 60. Le générateur de trajectoire 60 est alors configuré pour générer une trajectoire de déroutement 63 si une ou des quantités produites qt sont supérieures à une ou des limites réglementaires respectives à respecter dans une zone géographique 62 traversée par la trajectoire courante 61 de l'aéronef 1. La trajectoire de déroutement 63 est établie pour contourner la zone géographique 62. La trajectoire de déroutement 63 peut avoir une forme prédéterminée, comprenant par exemple une trajectoire droite de contournement 631 vers la gauche ou la droite d'une zone géographique à éviter, une trajectoire intermédiaire 632 sensiblement parallèle à la trajectoire courante 61 initiale, puis une trajectoire droite de rejointe 633 ralliant la trajectoire courante 61 initiale.

De manière alternative ou complémentaire, l'aéronef 1 peut comporter un alerteur 70 recevant le signal d'émission polluante. L'alerteur 70 est configuré pour générer une alerte moteur quand une différence entre la quantité produite qt courante et une quantité produite mémorisée dans la mémoire 50 à l'issue de la mission précédente pour un même polluant est supérieure à un seuil mémorisé, cette alerte moteur signalant un possible dysfonctionnement moteur. Selon un exemple, le contrôleur 40 est configuré pour déterminer nécessitant une action de maintenance Si la valeur absolue d'une différence entre une quantité produite à l'issue de la mission courante divisée par la durée de la mission courante et une quantité produite qt correspondante à l'issue de la mission précédente divisée par la durée de la mission précédente, est supérieure à une limite, le signal d'émission polluante indique que l'alerte doit être émise.

L'alerteur 70 peut générer une alerte prenant la forme d'une alarme visuelle, par exemple par le biais de l'émission d'une lumière avec une diode électroluminescente ou un équivalent ou de l'affichage sur un écran d'un ou plusieurs caractères, d'une alarme sonore, par le biais d'un haut-parleur, et/ou d'une alarme haptique, par exemple à l'aide d'une unité vibrante faisant vibrer un organe tenu ou porté par un individu.

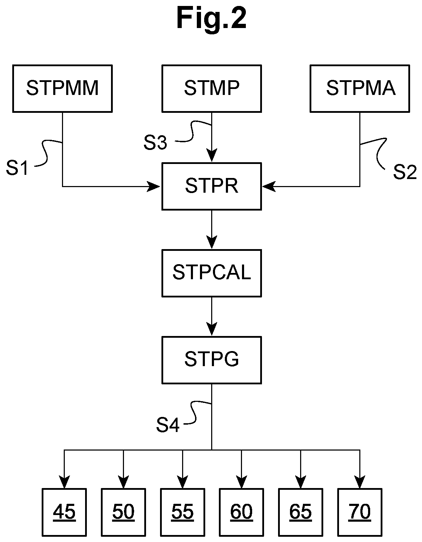

La figure 2 illustre une itération d'un procédé de détection d'émission polluante en vol avec un aéronef 1 selon l'invention.

A chaque itération, le procédé comporte une génération STPMM d'au moins un signal S1 de mesure moteur par moteur à combustion 10 avec un senseur moteur 20 associé.

De plus, le procédé comporte une génération STPMA d'au moins un signal S2 de mesure d'aéronef avec au moins un senseur d'aéronef 30.

Eventuellement, le procédé comporte une génération STMP d'au moins un signal S3 de paramétrage avec une interface homme-machine de paramétrage IHM1.

En conséquence, le procédé comporte une réception STPR avec le contrôleur 40 de l'aéronef 1 du ou des signaux S1 de mesure moteur et du ou des signaux S2 de mesure d'aéronef, voire du signal S3 de paramétrage.

Dès lors, le procédé comporte une détermination STPCAL avec le contrôleur 40 d'au moins une quantité produite, émise lors de ladite mission, d'un polluant en fonction des signaux S1, S2, voire S3 précités.

Enfin, le procédé comporte une émission STPG avec le contrôleur 40 d'au moins un signal S4 d'émission polluante en fonction du signal S1 de mesure moteur et du signal S2 de mesure d'aéronef voire du signal S3 de paramétrage.

Un signal S4 d'émission polluante peut être reçu par l'afficheur 45, et/ou de la mémoire 50, et/ou du générateur d'alarme 55, et/ou du générateur de trajectoire 60, et/ou du système de pilotage 65 automatique, et/ou l'alerteur 70.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Aéronef (1) comprenant une installation motrice (6) munie d'au moins un moteur à combustion (10),
**caractérisé en ce que** ledit aéronef (1) comporte un système (19) de détection d'émission polluante qui comprend :
- au moins un senseur moteur (20) par moteur à combustion (10), ledit senseur moteur (20) émettant un signal de mesure moteur porteur d'une valeur mesurée d'un paramètre moteur du moteur à combustion associé, ce paramètre moteur influençant ladite émission polluante,
- au moins un senseur d'aéronef (30), ledit senseur d'aéronef (30) émettant un signal de mesure d'aéronef porteur d'une valeur mesurée d'un paramètre d'aéronef, ce paramètre d'aéronef influençant ladite émission polluante,
- un contrôleur (40) recevant, lors d'une mission, le signal de mesure moteur et le signal de mesure d'aéronef, le contrôleur (40) étant configuré pour déterminer au moins une quantité produite d'un polluant émise lors de ladite mission, en fonction au moins du signal de mesure moteur et du signal de mesure d'aéronef, le contrôleur (40) étant configuré pour piloter au moins un système (45, 50, 55, 60, 65, 70) de l'aéronef en lui transmettant un signal d'émission polluante fonction de ladite au moins une quantité produite.

2. Aéronef selon la revendication 1,
**caractérisé en ce que** ladite au moins une quantité produite (qt) de polluant est choisie parmi : une quantité produite de dioxyde de carbone, une quantité produite d'oxyde d'azote, une quantité produite de particules non volatiles, une quantité produite de particules d'hydrocarbure imbrûlé.

3. Aéronef selon la revendication 2,
**caractérisé en ce que** ladite au moins une quantité produite (qt) d'un polluant est égale à une quantité instantanée (qinst) de ce polluant émise à un instant courant ou à la somme des quantités instantanées (qinst) de ce polluant émises depuis un démarrage de l'aéronef (1) ou à la somme des quantités instantanées (qinst) de ce polluant émises depuis un début d'une phase de vol courante.

4. Aéronef selon l'une quelconque des revendications 1 à 3,
**caractérisé en ce que** ledit paramètre moteur est à choisir dans la liste suivante : une température à l'intérieur du moteur à combustion (10) mesurée avec un senseur moteur de température (22), un débit de carburant circulant dans le moteur à combustion (10) mesuré avec un débitmètre moteur (21), une pression dans le moteur à combustion (10) mesurée avec un senseur moteur de pression (23), une puissance développée par le moteur à combustion (10) mesurée avec un senseur moteur de puissance (24), un vieillissement du moteur évalué par un calculateur (15) , une vitesse de rotation d'un générateur de gaz (11) du moteur à combustion (10) mesurée avec un premier senseur moteur de vitesse (25), une vitesse de rotation d'une turbine de travail (12) du moteur à combustion mesurée avec un deuxième senseur moteur de vitesse (26).

5. Aéronef selon l'une quelconque des revendications 1 à 4,
**caractérisé en ce que** ledit paramètre d'aéronef est à choisir dans la liste suivante : une pression extérieure (P0) dans un milieu entourant l'aéronef (1) mesurée avec un senseur d'aéronef de pression (31), une température extérieure (T0) dans ledit milieu mesurée avec un senseur d'aéronef de température (32) de l'aéronef (1), une puissance motrice générée par l'installation motrice mesurée avec un senseur d'aéronef de puissance (33), un débit de carburant circulant vers le moteur à combustion (10) mesuré avec un débitmètre (34) d'aéronef.

6. Aéronef selon l'une quelconque des revendications 1 à 5,
**caractérisé en ce que** ledit aéronef (1) comporte une interface homme-machine de paramétrage (IHM1) permettant de choisir un type de carburant, ladite interface homme-machine de paramétrage (IHM1) émettant un signal de paramétrage reçu par le contrôleur (40), le contrôleur (40) étant configuré pour déterminer ladite au moins une quantité produite en fonction du signal de mesure moteur ainsi que du signal de mesure d'aéronef et du signal de paramétrage.

7. Aéronef selon l'une quelconque des revendications 1 à 6,
**caractérisé en ce que** le signal d'émission polluante est porteur de ladite au moins une quantité produite (qt) de polluant et ledit au moins un système comporte au moins un des organes de traitement suivant : un afficheur (45) recevant le signal d'émission polluante et configuré pour afficher ladite au moins une quantité produite (qt) de polluant, une mémoire (50) de stockage recevant le signal d'émission polluante et configuré pour mémoriser ladite au moins une quantité produite (qt) de polluant.

8. Aéronef selon l'une quelconque des revendications 1 à 7,
**caractérisé en ce que** ledit au moins un système comporte un générateur d'alarme (55) recevant le signal d'émission polluante et configuré pour générer une alarme si ladite au moins une quantité produite (qt) de polluant est supérieure à un seuil mémorisé.

9. Aéronef selon l'une quelconque des revendications 1 à 8,
**caractérisé en ce que** le signal d'émission polluante est porteur d'au moins une quantité produite (qt) de polluant et ledit signal de mesure est transmis à un système de pilotage automatique (65), le système de pilotage automatique (65) étant configuré pour modifier un réglage de l'aéronef (1) si ladite au moins une quantité produite (qt) de polluant est supérieure à une limite d'émissions mémorisée.

10. Aéronef selon l'une quelconque des revendications 1 à 9,
**caractérisé en ce que** le signal d'émission polluante est porteur d'au moins une quantité produite (qt) de polluant et ledit signal de mesure est transmis à un générateur de trajectoire, le générateur (60) de trajectoire étant configuré pour générer une trajectoire de déroutement (63) si ladite au moins une quantité produite (qt) de polluant est supérieure à une limite réglementaire à respecter dans une zone géographique (62) traversée par une trajectoire courante (61) de l'aéronef (1).

11. Aéronef selon l'une quelconque des revendications 1 à 10,
**caractérisé en ce que** ladite mission étant réalisée après une mission précédente, le signal d'émission polluante est transmis à un alerteur (70), l'alerteur (70) étant configuré pour générer une alerte moteur en fonction d'une comparaison entre la quantité produite (qt) de polluant et une quantité produite de polluant mémorisée à l'issue d'une mission précédente ou d'une phase de vol équivalente précédente, cette alerte moteur signalant un possible dysfonctionnement du moteur à combustion.

12. Procédé de détection d'émission polluante en vol avec un aéronef (1) comprenant une installation motrice (6) munie d'au moins un moteur à combustion (10),
**caractérisé en ce que** le procédé comporte durant une mission :
- génération (STPMM) d'au moins un signal de mesure moteur par moteur à combustion avec un senseur moteur (20) associé, ledit signal de mesure moteur étant porteur d'une valeur mesurée d'un paramètre moteur du moteur à combustion (10) associé influençant ladite émission polluante,
- génération (STPMA) d'au moins un signal de mesure d'aéronef avec au moins un senseur d'aéronef (30), ledit signal de mesure d'aéronef étant porteur d'une valeur mesurée d'un paramètre d'aéronef influençant ladite émission polluante,
- réception (STPR) avec un contrôleur (40) de l'aéronef (1) du signal de mesure moteur et du signal de mesure d'aéronef,
- détermination (STPCAL) avec le contrôleur (40) d'au moins une quantité produite d'un polluant émise lors de ladite mission en fonction au moins du signal de mesure moteur et du signal de mesure d'aéronef, et
- contrôle (STPG) avec le contrôleur (40) d'au moins un système (45, 50, 55, 60, 65, 70) de l'aéronef en lui transmettant un signal d'émission polluante fonction de ladite au moins une quantité produite.

13. Procédé de détection d'émission polluante en vol selon la revendication 12,
**caractérisé en ce que** le procédé comporte au moins une des étapes suivantes :
- affichage, sur un afficheur (45) d'au moins un système recevant le signal d'émission polluante, de ladite au moins une quantité produite (qt) de polluant,
- mémorisation, dans une mémoire (50) de stockage d'au moins un système recevant le signal d'émission polluante, de ladite au moins une quantité produite (qt) de polluant,
- génération d'une alarme, avec un générateur d'alarme (55) d'au moins un système recevant le signal d'émission polluante, quand ladite au moins une quantité produite (qt) de polluant est supérieure à un seuil mémorisé,
- génération d'une trajectoire de déroutement, avec un générateur de trajectoire (60) d'au moins un système, quand ladite au moins une quantité produite (qt) de polluant est supérieure à une limite réglementaire à respecter dans une zone géographique (62) traversée par une trajectoire courante (61) de l'aéronef (1),
- génération d'une alerte, avec un alerteur (70) d'au moins un système recevant le signal d'émission polluante, en fonction d'une comparaison entre la quantité produite (qt) de polluant et une quantité produite de polluant mémorisée à l'issue d'une mission précédente ou d'une phase de vol équivalente,
- modification d'un réglage de l'aéronef (1), avec un système de pilotage automatique (65) d'au moins un système recevant le signal d'émission polluante, quand ladite au moins une quantité produite (qt) de polluant est supérieure à une limite d'émissions polluantes mémorisée.
